# EUROPEAN PATENT SPECIFICATION

(11) **EP 4 629 030 B1**
(45) Date of publication and mention of the grant of the patent: **28.10.2026**
(21) Application number: 23896669.1
(22) Date of filing: 24.11.2023
(51) Int. Cl.: G06F 3/01, G06F 3/0482, G06F 1/16, G02B 27/01

(54) **DISPLAY CONTROL METHOD, DISPLAY CONTROL APPARATUS, AND ELECTRONIC DEVICE**
ANZEIGESTEUERUNGSVERFAHREN, ANZEIGESTEUERUNGSVORRICHTUNG UND ELEKTRONISCHE VORRICHTUNG
PROCÉDÉ DE COMMANDE D'AFFICHAGE, APPAREIL DE COMMANDE D'AFFICHAGE ET DISPOSITIF ÉLECTRONIQUE

(30) Priority: 30.11.2022 CN 202211529709
(43) Date of publication of application: 08.10.2025
(73) Proprietor: Vivo Mobile Communication Co., Ltd., Dongguan, Guangdong 523863 (CN)
(72) Inventor: JI, Wenbin, Dongguan, Guangdong 523863 (CN)
(74) Representative: Murgitroyd & Company
(86) International application number: PCT/CN2023/133892
(87) International publication number: WO 2024/114518

(56) References cited:
- CN-A- 110 898 424
- CN-A- 114 363 705
- CN-A- 115 857 684
- CN-A- 116 034 310
- CN-U- 210 166 754
- US-A1- 2018 004 478
- US-A1- 2019 114 075
- US-A1- 2021 089 150
- US-A1- 2021 390 784
- US-A1- 2022 083 131

## Description

### CROSS-REFERENCE TO RELATED APPLICATIONS

This application claims priority to Chinese Patent Application No. 202211529709.1, filed with the China National Intellectual Property Administration on November 30, 2022 and entitled "DISPLAY CONTROL METHOD, DISPLAY CONTROL APPARATUS, AND ELECTRONIC DEVICE".

### TECHNICAL FIELD

This application pertains to the field of extended reality technologies, and specifically relates to a display control method, a display control apparatus, and an electronic device.

### BACKGROUND

Extended reality (Extended Reality, XR) refers to the use of computers to integrate real scenes with virtual content to create a virtual environment that allows human-computer interaction. The XR technology is also a general term for a plurality of technologies such as a virtual reality (Virtual Reality, VR) technology, an augmented reality (Augmented Reality, AR) technology, and a mixed reality (Mixed Reality, MR) technology.

A head-mounted wearable device is used as an example. A wearer needs to wear the wearable device on the head, so that the wearable device fits tightly against the face and blocks the wearer's vision to the outside world. Then the wearer can enter an interactive virtual scene, providing the wearer with immersive experience. Since the wearable device is limited to single-person use, the interaction between the wearer and the virtual environment is quite simplistic, resulting in poor interactivity.

US 2021/089150 A1 discloses a head-mounted electronic device with an inner display for the user and publically viewable external displays. Elongated finger sensors along the device's periphery enable touch, force, or proximity input to control visual elements, device settings, or provide haptic feedback. The device can also receive and process input or data from external equipment via wired or wireless communication, allowing integration with other electronic devices.

### SUMMARY

An objective of embodiments of this application is to provide a display control method, a display control apparatus, and an electronic device, so as to implement real-time interaction between a first user and a second user, thereby improving effectiveness of interaction between the first user and the second user, and further enriching interaction forms of a wearable device, so that the wearable device has relatively high interest and playability.

According to a first aspect, an embodiment of this application provides a display control method, where the method includes:
receiving a first control message sent by a second handle; and
in a case that the first control message indicates that target information is selected from at least two pieces of first information displayed on an outer display screen of a wearable device, displaying the target information on an inner display screen of the wearable device;
where the first control message is a control message sent by the second handle in a case that the second handle receives a first input performed by a second user, a wearer of the wearable device is a first user, and the second handle is a handle controlled by the second user.

According to a second aspect, an embodiment of this application provides a display control apparatus, where the apparatus includes:
a receiving module, configured to receive a first control message sent by a second handle; and
a display module, configured to: in a case that the first control message indicates that target information is selected from at least two pieces of first information displayed on an outer display screen of a wearable device, display the target information on an inner display screen of the wearable device;
where the first control message is a control message sent by the second handle in a case that the second handle receives a first input performed by a second user, a wearer of the wearable device is a first user, and the second handle is a handle controlled by the second user.

According to a third aspect, an embodiment of this application provides an electronic device. The electronic device includes a processor and a memory, the memory stores a program or instructions that may run on the processor, and when the program or the instructions are executed by the processor, the steps of the method according to the first aspect are implemented.

According to a fourth aspect, an embodiment of this application provides a readable storage medium. A program or instructions are stored on the readable storage medium, and when the program or the instructions are executed by a processor, the method according to the first aspect is implemented.

According to a fifth aspect, an embodiment of this application provides a chip. The chip includes a processor and a communication interface, the communication interface is coupled to the processor, and the processor is configured to run a program or instructions to implement the method according to the first aspect.

According to a sixth aspect, an embodiment of this application provides a computer program product. The program product is stored in a storage medium, and the program product is executed by at least one processor to implement the method according to the first aspect.

In embodiments of this application, the wearable device receives the first control message sent by the second handle, and the wearable device synchronously displays the target information on the inner display screen based on the first control message, so that the first user and the second user can interact in real time, thereby improving effectiveness of interaction between the first user and the second user, and further enriching interaction forms of the wearable device, so that the wearable device has relatively high interest and playability.

### BRIEF DESCRIPTION OF DRAWINGS

FIG. 1 is a schematic flowchart of a display control method according to some embodiments of this application;
FIG. 2 is a schematic diagram of an application scenario of a display control method according to some embodiments of this application;
FIG. 3 is a schematic diagram of an interface of a display control method according to some embodiments of this application;
FIG. 4 is a schematic diagram of an interface of a display control method according to some embodiments of this application;
FIG. 5 is a schematic diagram of an interface of a display control method according to some embodiments of this application;
FIG. 6 is a schematic diagram of an application scenario of a display control method according to some embodiments of this application;
FIG. 7 is a schematic diagram of an interface of a display control method according to some embodiments of this application;
FIG. 8 is a schematic diagram of an interface of a display control method according to some embodiments of this application;
FIG. 9 is a schematic diagram of an interface of a display control method according to some embodiments of this application;
FIG. 10 is a schematic diagram of an interface of a display control method according to some embodiments of this application;
FIG. 11 is a schematic diagram of an interface of a display control method according to some embodiments of this application;
FIG. 12 is a schematic diagram of an interface of a display control method according to some embodiments of this application;
FIG. 13 is a schematic diagram of a structure of a display control apparatus according to some embodiments of this application;
FIG. 14 is a schematic diagram of a structure of an electronic device according to some embodiments of this application; and
FIG. 15 is a schematic diagram of hardware of an electronic device according to some embodiments of this application.

### DESCRIPTION OF EMBODIMENTS

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application shall fall within the protection scope of this application.

In the specification and claims of this application, the terms "first", "second", and so on are intended to distinguish between similar objects but do not necessarily indicate a specific order or sequence. It should be understood that data used in this way may be interchangeable in an appropriate case, so that the embodiments of this application can be implemented in a sequence other than those shown or described herein. Objects distinguished by "first", "second", and the like are generally of one type, and a quantity of objects is not limited. For example, the first object may be one, or may be multiple. In addition, in the specification and the claims, "and/or" represents at least one of the connected objects, and the character "/" generally represents a "or" relationship between the associated objects.

With reference to the accompanying drawings, the following describes in detail the display control method, the display control apparatus, and the electronic device provided in embodiments of this application by using specific embodiments and application scenarios thereof.

An execution body of the display control method provided in embodiments of this application may include but is not limited to a wearable device. The wearable device may be a VR device, an AR device, an MR device, or the like. This is not specifically limited herein.

It should be noted that an inner display screen is generally disposed on the wearable device, and the inner display screen is a display area that can be seen by a wearer of the wearable device. In this embodiment, a display apparatus may be added to an outer side of the wearable device, that is, an outer display screen is disposed on the outer side of the wearable device, and the outer display screen is a display area that can be seen by a non-wearer.

After the wearer opens entertainment content by using the wearable device, the inner display screen displays a virtual scene corresponding to the entertainment content. The wearable device may be communicatively connected to a plurality of handles, so that the wearer can perform interactive operations by using a handle and a virtual scene displayed on the inner display screen, and a non-wearer in the same real scene as the wearer can interact with the wearer by using a different handle and content displayed on the outer display screen.

The entertainment content may include: a virtual game, a virtual tour, a virtual sport, a virtual movie, and the like.

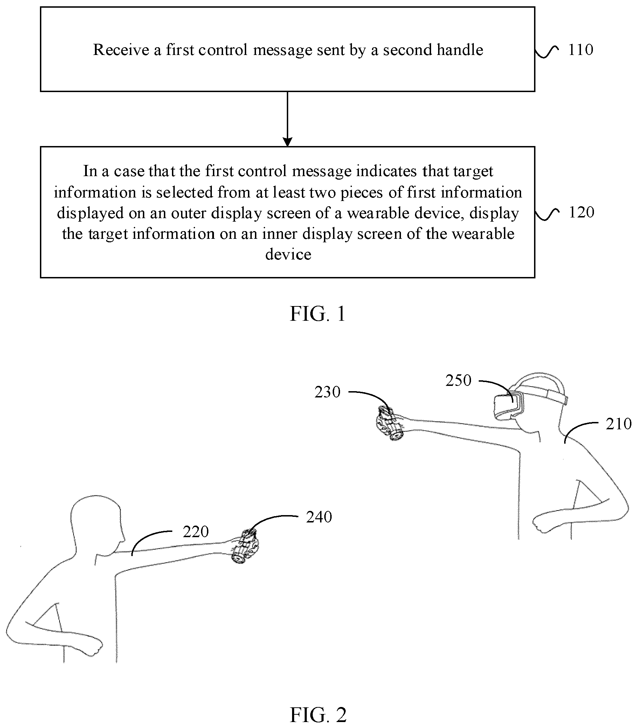

FIG. 1 is a schematic flowchart of a display control method according to an embodiment of this application. As shown in FIG. 1, the information prompting method includes step 110 and step 120.

Step 110: Receive a first control message sent by a second handle.

Step 120: In a case that the first control message indicates that target information is selected from at least two pieces of first information displayed on an outer display screen of a wearable device, display the target information on an inner display screen of the wearable device.

The first control message is a control message sent by the second handle in a case that the second handle receives a first input performed by a second user, a wearer of the wearable device is a first user, and the second handle is a handle controlled by the second user.

In actual execution, as shown in FIG. 2, a first user 210 and a second user 220 are in a same real scene, the first user 210 is a wearer of a wearable device 250, a first handle 230 is a handle controlled by the first user 210, the second user 220 is a non-wearer, and a second handle 240 is a handle controlled by the second user 220. The wearable device 250 is communicatively connected to both the first handle 230 and the second handle 240. The second user 220 can see content displayed on an outer display screen of the wearable device 250.

The second handle 240 receives a first input performed by the second user 220, and in response to the first input, the second handle 240 sends a first control message to the wearable device 250 worn by the first user 210.

In this embodiment of this application, the foregoing first input is used by the second handle 240 to select target information from at least two pieces of first information displayed on the outer display screen of the wearable device 250 to generate the first control message.

The first information in this embodiment of this application may be information communicated in an interaction process between the first user 210 and the second user 220.

The first information in this embodiment of this application includes but is not limited to one or more of image information, text information, sound effect information, or the like. For example, the first information may be interaction information associated with content displayed on the inner display screen of the wearable device 250, or may be default interaction information, or certainly may be interaction information that is set according to an actual requirement. This is not specifically limited herein.

For example, the image information may be an image with an interactive meaning, such as a like image, an applause image, a fireworks image, a smiling face image, or another expression image, or may be a custom image. The text information may be text information that is entered in real time, preset text information, or text information that is carried by the device for interaction, for example, "You are great" or "Thumbs up for you". The sound effect information may be an audio effect that is carried by the device for interaction, for example, a laughter sound effect, an applause sound effect, or a firecracker sound effect.

The first information may be any combination of the image information, the text information, or the sound effect information. For example, the applause image may be combined with the applause sound effect. If the text information is "applause for you", the text information may be combined with the applause image or the applause sound effect. Alternatively, the sound effect information is the laughter sound effect, and may be combined with the text information "hahahaha".

For example, the foregoing first input includes but is not limited to: a touch input on the second handle 240 which is performed by the second user 220 by using a touch apparatus such as a touchscreen or a physical button, or a voice instruction entered by the second user 220, or another feasible input, which may be specifically determined according to an actual use requirement. This is not limited in this embodiment of this application.

The touch input in this embodiment of this application includes but is not limited to: a tap input, a slide input, or a press input on the second handle 240. The foregoing tap input may be a single-tap input, a double-tap input, an input with any number of taps, or the like, or may be a long-press input or a short-press input.

For example, the second handle 240 is provided with a plurality of physical buttons or a touchscreen whose display area includes a plurality of target controls. The plurality of physical buttons are respectively corresponding to functions such as Forward, Backward, Left, Right, On/Off, OK, or Character input. The plurality of target controls on the touchscreen may include controls corresponding to functions such as Forward, Backward, Left, Right, On/Off, OK, or Character input. The first input may be an input by pressing a physical button by the second user 220, or may be a combined operation of pressing a plurality of physical buttons simultaneously, or may be an input by tapping a target control by the second user 220, so as to complete selection of the target information.

The voice instruction in this embodiment of this application includes but is not limited to: A sound pick-up unit for collecting voice of a user is disposed on the second handle 240; and when the second handle 240 receives a voice such as "Select XXX", the second handle 240 is triggered to select the target information and generate the first control message.

Certainly, in some other embodiments of this application, the first input may alternatively be in another form, including but not limited to a character input or a fingerprint input, which may be specifically determined according to an actual requirement. This is not limited in this embodiment of this application.

In some embodiments of this application, after receiving the first input performed by the second user 220, the second handle 240 generates the first control message, and the second handle 240 may send the first control message to the wearable device 250 in response to the first input. After receiving the first control message, the wearable device 250 displays the target information on the inner display screen of the wearable device 250.

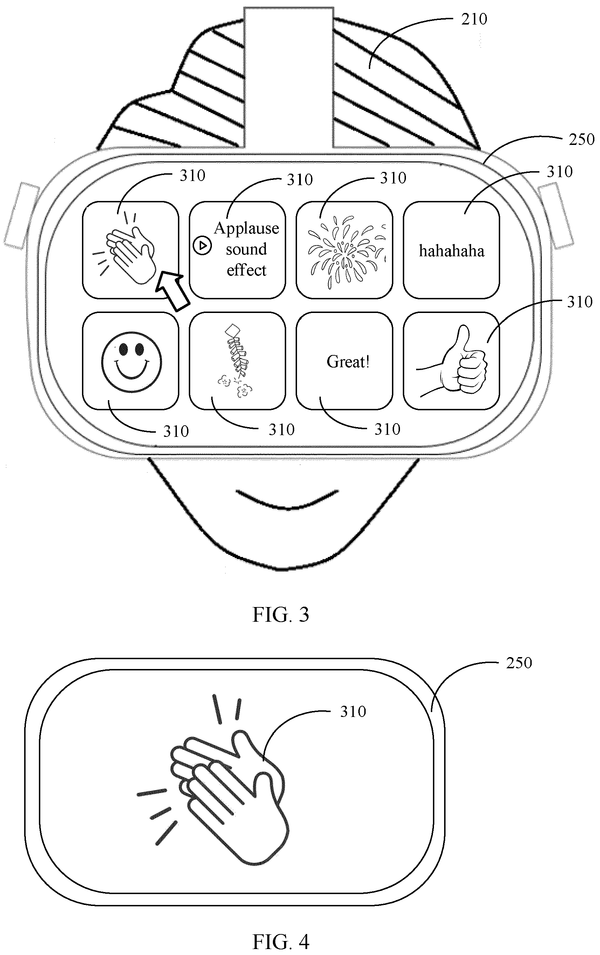

As shown in FIG. 3, the plurality of pieces of first information 310 displayed on the outer display screen of the wearable device 250 corresponding to the first user 210 specifically include: an applause image 310, an applause sound effect image 310, a fireworks image 310, and text information "hahahaha" 310 that are sequentially displayed in the first row from left to right, and a smiling face image 310, a firecracker image 310, text information "You are great!" 310, and a like image 310 that are sequentially displayed in the second row from left to right. After the applause sound effect image 310 is selected, applause sound effect audio is played. The second user 220 may select one or more of the plurality of pieces of first information 310 by using buttons on the second handle 240, for example, may select the applause image 310 as the target information.

The second handle 240 generates the first control message, and sends the first control message to the wearable device 250. After receiving the first control message, the wearable device 250 synchronously displays the target information on the inner display screen of the wearable device 250. As shown in FIG. 4, when the target information selected by the second user 220 on the outer display screen is the applause image 310, the applause image 310 is synchronously displayed on the inner display screen, and the first user 210 may see, from the inner display screen, the applause image 310 selected by the second user 220 on the outer display screen.

A manner and duration of displaying the target information on the inner display screen may be determined according to an actual requirement. This is not specifically limited herein. For example, after viewing the target information, the first user 210 may choose to close the target information; or the target information may be automatically disabled after a specific time.

This embodiment of this application may be used in the following scenario.

The first user 210 wears the wearable device 250 to play a boxing match game. In a case that the game starts, the second user 220 may view a game scene of the first user 210 on the outer display screen or an external display screen of the wearable device 250. If the first user 210 wins the game in the game scene, the second user 220 invokes, by using the second handle 240, interaction content related to the game on the outer display screen of the wearable device 250. As shown in FIG. 3, in this case, the outer display screen may display at least one piece of first information 310 used for interaction.

The second user 220 may select the applause image 310 from the at least one piece of first information 310 by using the second handle 240 as the target information, and send the first control message to the wearable device 250. After the wearable device 250 receives the first control message sent by the second handle 240, as shown in FIG. 4, the applause image 310 is displayed on the inner display screen of the wearable device 250, and the first user 210 can view the applause image 310 in the game scene, so that the first user 210 can feel "encouragement" from the second user 220. The first user 210 no longer obtains only single-person game experience in the game of the wearable device 250, but can also obtain experience of interacting with another person.

According to the display control method provided in this embodiment of this application, the wearable device receives the first control message sent by the second handle, and the wearable device synchronously displays the target information on the inner display screen based on the first control message, so that the first user and the second user can interact in real time, thereby improving effectiveness of interaction between the first user and the second user, and further enriching interaction forms of the wearable device, so that the wearable device has relatively high interest and playability.

In some embodiments, after the target information is displayed on the inner display screen of the wearable device, the display control method further includes:
in a case that the first handle receives a second input performed by the first user, sending a second control message to the second handle, to indicate the second handle to output first feedback information, where the first handle is a handle controlled by the first user.

The first feedback information indicates that the target information has been displayed on the inner display screen, and the first feedback information includes vibration information or voice information.

In actual execution, after the target information is displayed on the inner display screen of the wearable device 250, the first handle 230 may receive the second input performed by the first user 210.

The second input is used by the first handle 230 to generate the second control message, and to send the second control message to the second handle 240. The second control message indicates the second handle 240 to output the first feedback information. The first feedback information is used to feed back to the second user 220 that the target information has been displayed on the inner display screen, which also indicates that the first user 210 can see the target information on the inner display screen.

For example, the foregoing second input includes but is not limited to: a touch input on the first handle 230 by the first user 210 by using a touch apparatus such as a physical button, or a voice instruction entered by the first user 210, or another feasible input, which may be specifically determined according to an actual use requirement. This is not limited in this embodiment of this application.

The touch input in this embodiment of this application includes but is not limited to: a tap input or a press input on the first handle 230. The foregoing tap input may be a single-tap input, a double-tap input, an input with any number of taps, or the like, or may be a long-press input or a short-press input.

For example, a plurality of physical buttons may be disposed on the first handle 230. The plurality of physical buttons may be respectively corresponding to functions such as Forward, Backward, Left, Right, On/Off, OK, or Character input. The second input may be an input by pressing the physical button performed by the first user 210, or may be a combined operation of simultaneously pressing a plurality of physical buttons to complete the second input.

The voice instruction in this embodiment of this application includes but is not limited to: A sound pick-up unit for collecting voice of a user is disposed on the first handle 230; and when the first handle 230 receives a voice such as "Received", the second handle 240 is triggered to generate the second control message.

Certainly, in some other embodiments of this application, the second input may alternatively be in another form, including but not limited to a character input or a fingerprint input, which may be specifically determined according to an actual requirement. This is not limited in this embodiment of this application.

In some embodiments of this application, after receiving the second input performed by the first user 210, the first handle 230 generates the second control message, and the first handle 230 may send the second control message to the second handle 240 in response to the second input.

After receiving the second control message, the second handle 240 outputs the first feedback information in response to the second control message. The first feedback information may be vibration information or voice information.

In a case that the first feedback information is vibration information, the second handle 240 may automatically perform vibration, and a vibration frequency and a vibration time may be set based on an actual situation, and are not specifically limited herein. In a case that the first feedback information is voice information, the second handle 240 may automatically output a voice. For example, the output voice may be "Like received" or "Thank you for encouraging".

The second user 220 may perceive, based on the vibration of the second handle 240, the feedback information from the first user 210 or learn, based on the voice information, the feedback information from the first user 210, so as to learn, in a timely manner, that the first user 210 has seen the target information.

According to the display control method provided in this embodiment of this application, the second user selects the target information on the outer display screen of the wearable device corresponding to the first user. After the first user sees the target information that is synchronously displayed on the inner display screen, the first user may send the second control message to the second handle through the first handle, and the second user can receive the corresponding first feedback information. This can improve interaction convenience of the wearable device, allowing the first user and the second user to interact back and forth, which can improve interactive experience of the first user, further increase the playability of the wearable device, and therefore increase the user's interest in using the wearable device.

In some embodiments, before the first control message sent by the second handle is received, display content on the outer display screen is at least two pieces of second information.

The display control method further includes:
receiving a third control message sent by the second handle, where the third control message is a control message sent by the second handle in a case that the second handle receives a third input performed by the second user; and
in a case that the third control message indicates to update the display content on the outer display screen, updating the at least two pieces of second information displayed on the outer display screen to the at least two pieces of first information.

It may be understood that the display content on the outer display screen of the wearable device 250 may alternatively be the at least two pieces of second information. The second information may be information whose content is different from that of the first information, and is used to provide more interaction information options for the user.

The second information in this embodiment of this application may be information communicated in an interaction process between the first user 210 and the second user 220.

The second information in this embodiment of this application includes but is not limited to one or more of image information, text information, sound effect information, or the like. For example, the second information may be interaction information associated with content displayed on the inner display screen of the wearable device 250, or may be default interaction information, or certainly may be interaction information that is set according to an actual requirement. This is not specifically limited herein.

For example, the image information may be an image with an interactive meaning, such as a like image, an applause image, a fireworks image, a smiling face image, or another expression image, or may be a custom image. The text information may be text information that is entered in real time, preset text information, or text information that is carried by the device for interaction, for example, "You are great" or "Thumbs up for you". The sound effect information may be an audio effect that is carried by the device for interaction, for example, a laughter sound effect, an applause sound effect, or a firecracker sound effect.

The second information may be any combination of the image information, the text information, or the sound effect information. For example, the applause image may be combined with the applause sound effect. If the text information is "applause for you", the text information may be combined with the applause image or the applause sound effect. Alternatively, the sound effect information is the laughter sound effect, and may be combined with the text information "hahahaha".

In this embodiment of this application, the second handle 240 receives a third input performed by the second user 220, and in response to the third input, the second handle 240 sends a third control message to the wearable device 250 worn by the first user 210.

In this embodiment of this application, the foregoing third input is used by the second handle 240 to generate the third control message. The third control message indicates to update the display content on the outer display screen.

For example, the foregoing third input includes but is not limited to: a touch input on the second handle 240 which is performed by the second user 220 by using a touch apparatus such as a touchscreen or a physical button, or a voice instruction entered by the second user 220, or another feasible input, which may be specifically determined according to an actual use requirement. This is not limited in this embodiment of this application.

The touch input in this embodiment of this application includes but is not limited to: a tap input, a slide input, or a press input on the second handle 240. The foregoing tap input may be a single-tap input, a double-tap input, an input with any number of taps, or the like, or may be a long-press input or a short-press input.

For example, the second handle 240 is provided with a plurality of physical buttons or a touchscreen whose display area includes a plurality of target controls. The plurality of physical buttons are respectively corresponding to functions such as Forward, Backward, Left, Right, On/Off, OK, or Character input. The plurality of target controls on the touchscreen may include controls corresponding to functions such as Forward, Backward, Left, Right, On/Off, OK, or Character input. The third input may be an input by pressing a physical button by the second user 220, or may be a combined operation of pressing a plurality of physical buttons simultaneously, or may be an input by tapping a target control by the second user 220.

The voice instruction in this embodiment of this application includes but is not limited to: A sound pick-up unit for collecting voice of a user is disposed on the second handle 240; and when the second handle 240 receives a voice such as "Next page" or "Refresh", the second handle is triggered to generate the third control message.

Certainly, in some other embodiments of this application, the third input may alternatively be in another form, including but not limited to a character input or a fingerprint input, which may be specifically determined according to an actual requirement. This is not limited in this embodiment of this application.

In some embodiments of this application, after receiving the third input performed by the second user, the second handle 240 generates the third control message, and the second handle 240 may send the third control message to the wearable device 250 in response to the third input. After receiving the third control message, the wearable device 250 updates the display content on the outer display of the wearable device 250. The updated display content may be the at least two pieces of first information.

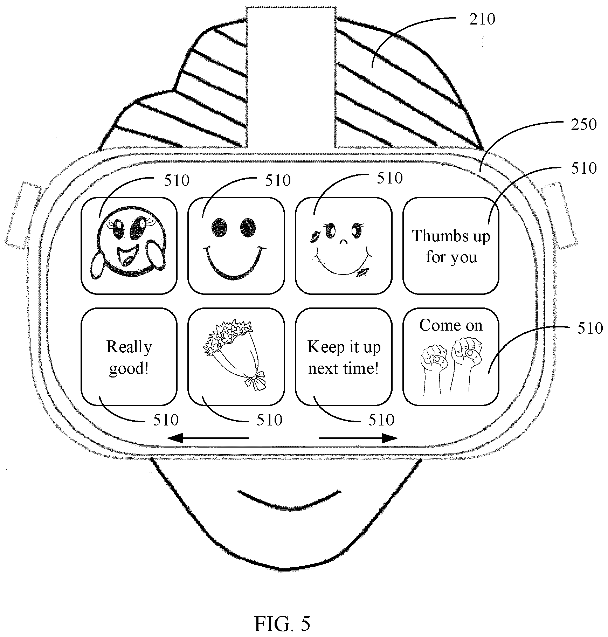

As shown in FIG. 5, the outer display screen of the wearable device 250 worn by the first user 210 in FIG. 5 displays at least two pieces of second information 510. The second information 510 specifically includes: a laughing expression image 510, a smiling expression image 510, a blowing kiss image 510, and text information "Thumbs up for you" 510 that are sequentially displayed in the first row from left to right, and text information "Really good" 510, a confetti image 510, text information "Keep it up next time!" 510, and a cheering image 510 that are sequentially displayed in the second row from left to right. In addition, two arrows are displayed on a display interface corresponding to the second information 510, which indicates that the page of the display content may be turned. The second user 220 may press the "Left" button or "Right" button of the second handle 240, so as to turn the page or refresh the page of the display interface corresponding to the second information 510, and further the updated display content is displayed on the outer display screen. The updated display content is shown in FIG. 3, that is, the at least two pieces of first information 310.

According to the display control method provided in this embodiment of this application, the third control message is generated by using the third input performed through the second handle, and the at least two pieces of second information displayed on the outer display screen of the wearable device are updated to the at least two pieces of first information, so that more abundant interaction information can be provided to the second user, different interaction effects can be obtained, and an interaction requirement of the user is better met.

In some embodiments, in a case that the first control message sent by the second handle and a fourth control message sent by a third handle are received, displaying the target information on the inner display screen of the wearable device includes:
in a case that the first control message indicates that first target information is selected from the at least two pieces of first information displayed on the outer display screen, and the fourth control message indicates that second target information is selected from the at least two pieces of first information displayed on the outer display screen, displaying the first target information in a first display area of the inner display screen, and displaying the second target information in the second display area of the inner display screen.

The first display area is a display area associated with a handle identifier of the second handle and face information of the second user that controls the second handle, and the second display area is a display area associated with a handle identifier of the third handle and face information of a third user that controls the third handle. The fourth control message is a control message sent by the third handle in a case that the third handle receives a fourth input performed by the third user, and the third handle is a handle controlled by the third user.

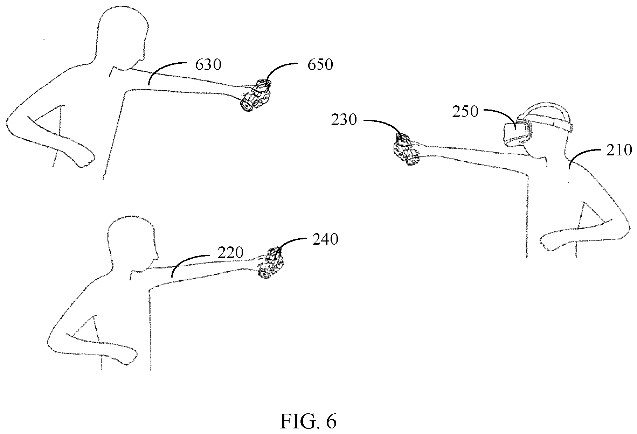

In actual execution, as shown in FIG. 6, the first user 210, the second user 220, and the third user 630 are in the same real scene, the first user 210 is a wearer of the wearable device 250, the first handle 230 is a handle controlled by the first user 210, the second user 220 and the third user 630 are non-wearers, the second handle 240 is a handle controlled by the second user 220, and the third handle 650 is a handle controlled by the third user 630. The wearable device 250 is communicatively connected to the first handle 230, the second handle 240, and the third handle 650. Both the second user 220 and the third user 630 can see content displayed on the outer display screen of the wearable device 250.

It may be understood that in an interaction scenario of three or more persons, at least two non-wearers may simultaneously send, to a wearable device of a wearer, control messages indicating that target information is selected on an outer display screen.

In this embodiment of this application, the second handle 240 receives the first input performed by the second user 220, and in response to the first input, the second handle 240 sends the first control message to the wearable device 250 worn by the first user 210.

The foregoing first input is used by the second handle 240 to select the first target information from the at least two pieces of first information displayed on the outer display screen of the wearable device 250 to generate the first control message. The first input has been described in the foregoing embodiment. Details are not described herein again.

The third handle 650 receives the fourth input performed by the second user 220, and in response to the fourth input, the third handle 650 sends the fourth control message to the wearable device 250 worn by the first user 210.

The foregoing fourth input is used by the second handle 240 to select the second target information from the at least two pieces of first information displayed on the outer display screen of the wearable device 250 to generate the fourth control message.

For example, the foregoing fourth input includes but is not limited to: a touch input on the third handle 650 by the third user 630 by using a touch apparatus such as a touchscreen or a physical button, or a voice instruction entered by the third user 630, or another feasible input, which may be specifically determined according to an actual use requirement. This is not limited in this embodiment of this application.

The touch input in this embodiment of this application includes but is not limited to: a tap input, a slide input, or a press input on the third handle 650. The foregoing tap input may be a single-tap input, a double-tap input, an input with any number of taps, or the like, or may be a long-press input or a short-press input.

For example, the third handle 650 is provided with a plurality of physical buttons or a touchscreen whose display area includes a plurality of target controls. The plurality of physical buttons are respectively corresponding to functions such as Forward, Backward, Left, Right, On/Off, OK, or Character input. The plurality of target controls on the touchscreen may include controls corresponding to functions such as Forward, Backward, Left, Right, On/Off, OK, or Character input. The fourth input may be an input by pressing a physical button by the third user 630, or may be a combined operation of pressing a plurality of physical buttons simultaneously, or may be an input by tapping a target control by the third user 630.

The voice instruction in this embodiment of this application includes but is not limited to: A sound pick-up unit for collecting voice of a user is disposed on the third handle 650; and when the third handle 650 receives a voice such as "Select XXX", the third handle 650 is triggered to select the second target information and generate the fourth control message.

Certainly, in some other embodiments of this application, the fourth input may alternatively be in another form, including but not limited to a character input or a fingerprint input, which may be specifically determined according to an actual requirement. This is not limited in this embodiment of this application.

In some embodiments of this application, after receiving the fourth input performed by the third user 630, the third handle 650 generates the fourth control message, and the third handle 650 may send the fourth control message to the wearable device 250 in response to the fourth input.

In a case that the wearable device 250 is communicatively connected to a plurality of handles, handle identifiers of the handles may be determined. The wearable device 250 may further collect, through a camera, face information of a user that controls a handle, and determine a display area of the target information based on a handle identifier and the face information.

In the case that the wearable device 250 receives the first control message sent by the second handle 240 and the fourth control message sent by the third handle 650, the first display area corresponding to the first target information is determined based on the handle identifier of the second handle 240 and the face information of the second user 220 that controls the second handle 240, and the second display area corresponding to the second target information is determined based on the handle identifier of the third handle 650 and the face information of the third user 630 that controls the third handle 650.

As shown in FIG. 6, the wearable device 250 may determine, based on the collected face information of the second user 220 and the handle identifier of the second handle 240, that the second user 220 is located on the left side of the first user 210. In this case, the first display area corresponding to the first target information may be a left half of the display area corresponding to the inner display screen.

The wearable device 250 may determine, based on the collected face information of the third user 630 and the handle identifier of the third handle 650, that the third user 630 is located on the right side of the first user 210. In this case, the second display area corresponding to the second target information may be a right half of the display area corresponding to the inner display screen.

After the first display area and the second display area are determined, the first target information is displayed in the first display area of the inner display screen of the wearable device 250, and the second target information is displayed in the second display area of the inner display screen.

It may be understood that, when the inner display screen displays the first target information or the second target information, a face image corresponding to the first target information or a face image or the handle identifier corresponding to the second target information may be further displayed, so that the user can distinguish an interaction object corresponding to each piece of target information.

According to the display control method provided in this embodiment of this application, the first display area corresponding to the first target information is determined by using the handle identifier of the second handle and the collected face information of the second user, and the second display area corresponding to the second target information is determined by using the handle identifier of the third handle and the collected face information of the third user. The first user can view different pieces of target information in different display areas of the inner display screen, so that when a plurality of users simultaneously send control messages, information displayed on the inner display screen does not interfere with each other, and interaction experience of the first user is clearer in a situation of interaction involving a plurality of users.

In some embodiments, the display control method further includes:
receiving a fifth control message sent by the second handle, where the fifth control message includes location change information of the second handle; and
in a case that the fifth control message indicates that the outer display screen displays a track drawn by the second handle, synchronously displaying a first track on the outer display screen and the inner display screen based on the location change information of the second handle.

The first track is generated based on the position change information of the second handle.

In this embodiment of this application, when the wearable device enters a specific interactive mode, the second user 220 may control the second handle 240 to perform track drawing.

The wearable device 250 may determine action information of the second user 220 according to a visual recognition algorithm, and determine the location change information of the second handle 240 based on the action information of the second user 220, so as to determine a motion track of the second handle 240.

The motion track of the second handle 240 is a movement track of the second handle 240 in a real environment, and a size of a display area corresponding to the outer display screen is limited. Therefore, the motion track of the second handle 240 may be adaptively adjusted according to a specific scaling ratio, to enable the motion track to be presented on the outer display screen with a proper size. In this case, the track displayed on the outer display screen is the first track.

The scaling ratio may be determined according to a distance between the wearable device 250 and the second handle 240, or may be set according to an actual requirement of the user. This is not specifically limited herein.

In this embodiment of this application, in the case that the second handle 240 sends the fifth control message to the wearable device 250, the wearable device 250 receives the fifth control message, and displays, in a track synchronization manner indicated by the fifth control message, the first track corresponding to the location change information of the second handle 240 on the outer display screen and the inner display screen.

The track synchronization display manner includes the following manners.

Manner 1: The wearable device 250 generates the first track in real time based on the location change information of the second handle 240. In this interactive mode, in a process in which the second user 220 controls the second handle 240 to move, the wearable device 250 may form the first track in real time according to the movement track of the second handle 240, and display the first track in real time synchronously on the outer display screen and the inner display screen of the wearable device 250. The first user 210 and the second user 220 may simultaneously see a drawing process of the first track.

In the case that the wearable device 250 receives the fifth control message, location information of a start point of the track of the second handle 240 is first determined, and the start point of the track is synchronously displayed on the outer display screen and the inner display screen. As long as the location information of the second handle 240 changes under control of the second user 220, the first track is generated in real time according to location information of real-time obtained track points, and the first track generated by the track points is synchronously displayed on the outer display screen and the inner display screen.

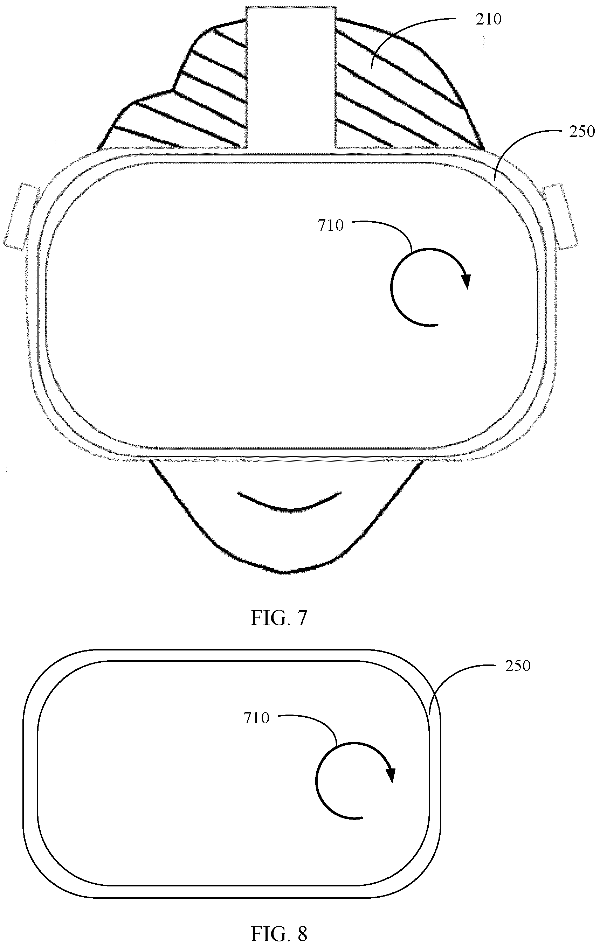

For example, as shown in FIG. 7 and FIG. 8, FIG. 7 shows content displayed on the outer display screen, and FIG. 8 shows content displayed on the inner display screen. The second user 220 controls the second handle 240 to draw an arc-shaped track 710. The drawing process of the arc-shaped track 710 may be displayed on the outer display screen and the inner display screen in synchronization.

Manner 2: The wearable device 250 generates the first track according to location change information of the second handle 240 that is obtained in a preset time period. Alternatively, when a time period in which position information of the second handle 240 stops changing exceeds a time threshold, the first track is generated according to the position information of the second handle 240 that is obtained before the position information stops changing.

In this interactive mode, the complete first track is generated after the second user 220 controls the second handle 240 to complete all movement operations. After the first track is generated, the first track is displayed on the outer display screen and the inner display screen of the wearable device 250 in synchronization. The first user 210 and the second user 220 can simultaneously see the complete first track, but cannot see a drawing process of the first track.

A start moment of the preset time period is a moment at which the wearable device 250 receives the fifth control message. An end moment of the preset time period may be set according to an actual requirement, and the time threshold may also be set according to an actual requirement. This is not limited herein.

In this interactive mode, in the case that the wearable device 250 receives the fifth control message, the first track is generated according to the location information of the second handle 240 that is obtained in real time in the preset time period, and the first track is synchronously displayed on the outer display screen and the inner display screen after the preset time period ends.

Alternatively, in the case that the wearable device 250 receives the fifth control message, the position information of the second handle 240 is obtained in real time to generate the first track, and when the time period in which the position information of the second handle 240 stops changing exceeds the time threshold, the first track is synchronously displayed on the outer display screen and the inner display screen.

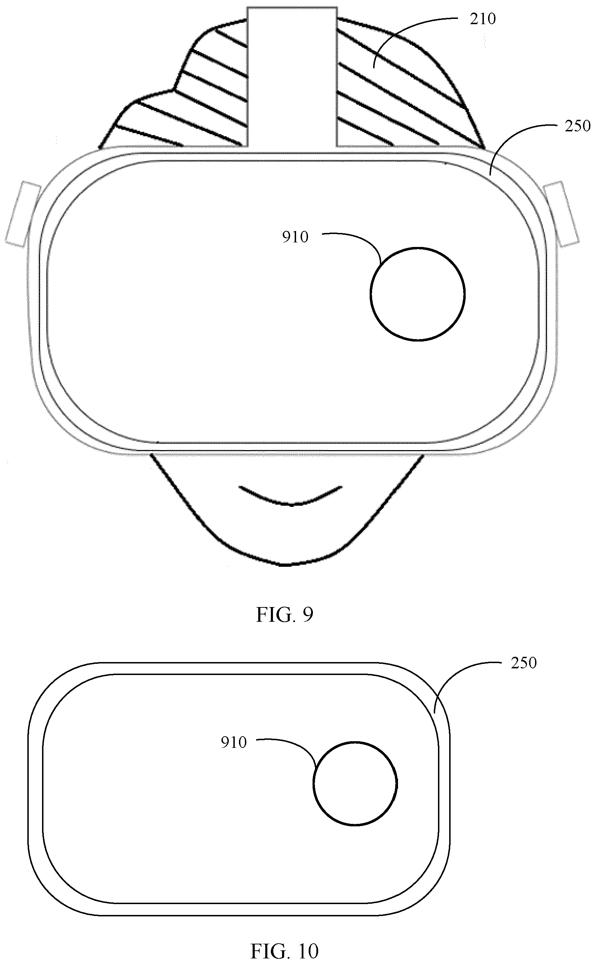

For example, as shown in FIG. 9 and FIG. 10, FIG. 9 shows content displayed on the outer display screen, and FIG. 10 shows content displayed on the inner display screen.

It is assumed that the preset time period is 30 seconds. In the case that the wearable device 250 receives the fifth control message, the second user 220 controls the second handle 240 to start to draw a circular track. The second user 220 completes drawing of a complete circular track within 30 seconds. In this case, the wearable device 250 may generate a circular track 910 according to location change information of the second handle 240 within 30 seconds. The complete circular track 910 can then be displayed synchronously on the outer display screen and inner display screen.

Alternatively, it is assumed that the time threshold is 5 seconds. In the case that the wearable device 250 receives the fifth control message, the second user 220 controls the second handle 240 to start to draw a circular track. After the second user 220 completes drawing, the complete circular track 910 may be displayed on the outer display screen and the inner display screen after the location change information of the second handle 240 stops changing for more than 5 seconds.

This embodiment of this application may be used in the following scenario.

The first user 210 wearing the wearable device 250 plays a Pictionary game with the second user 220. The role of the first user 210 in the game is a word guesser, and the role of the second user 220 in the game is a painter.

In a case in which the game starts, the second user 220 draws a track by using the second handle 240 according to a given phrase "The flowers are beautiful and the moon is full", and generates the fifth control message.

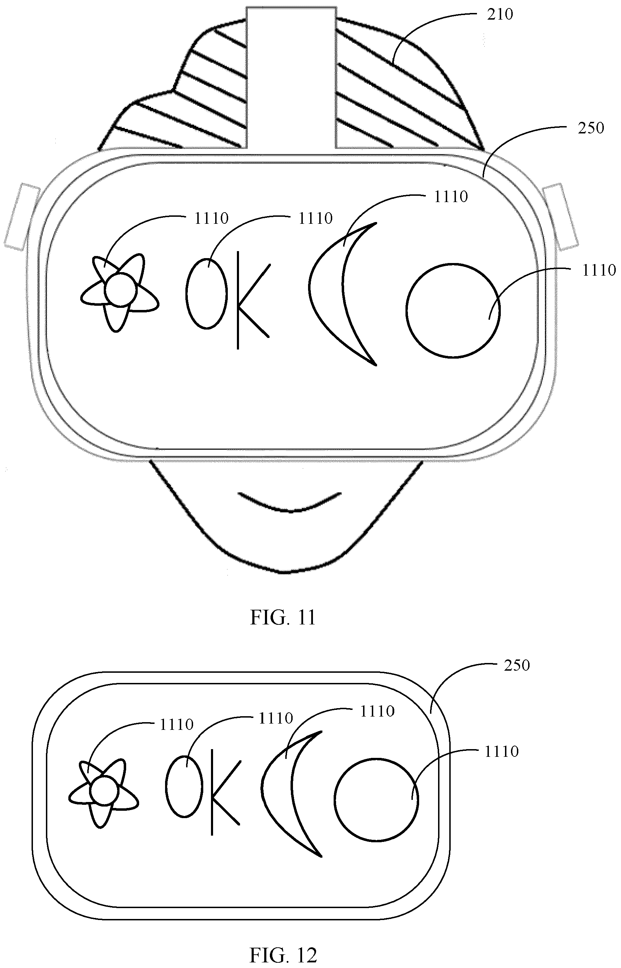

The second handle 240 sends the fifth control message to the wearable device 250. The wearable device 250 may determine location change information of the second handle 240 based on the fifth control message. A motion track of the second handle 240 is determined based on the location change information of the second handle 240. Based on the motion track of the second handle 240, the first track 1110 displayed on the outer display screen and the inner display screen may be determined, as shown in FIG. 11 and FIG. 12.

In a process of drawing the track by the second user 220 by using the second handle 240, the drawing process of the first track 1110 may be viewed in real time from the outer display screen and the inner display screen.

Alternatively, after the second user 220 completes track drawing by using the second handle 240, the outer display screen and the inner display screen directly display the final first track 1110.

According to the display control method provided in this embodiment of this application, the first track may be generated by using the location change information of the second handle, and when the fifth control message indicates that the track drawn by the second handle is displayed on the outer display screen, the first track is synchronously displayed on the outer display screen and the inner display screen, so that interactivity between the first user and the second user is improved, and a participation level of interaction between the first user who is a wearer and the second user who is a non-wearer is improved.

In some embodiments, after the outer display screen and the inner display screen synchronously display the first track, the display control method further includes:
in a case that the first handle receives a fifth input performed by the first user, synchronously displaying third information entered by the fifth input on the inner display screen and the outer display screen.

In this embodiment of this application, the foregoing fifth input is used by the first handle to enter the third information.

For example, the foregoing fifth input includes but is not limited to: a touch input on the first handle 230 which is performed by the first user 210 by using a touch apparatus such as a touchscreen or a physical button, or a voice instruction entered by the first user 210, or another feasible input, which may be specifically determined according to an actual use requirement. This is not limited in this embodiment of this application.

The touch input in this embodiment of this application includes but is not limited to: a tap input, a slide input, or a press input on the first handle 230. The foregoing tap input may be a single-tap input, a double-tap input, an input with any number of taps, or the like, or may be a long-press input or a short-press input.

For example, the first handle 230 is provided with a plurality of physical buttons or a touchscreen whose display area includes a plurality of target controls. The plurality of physical buttons are respectively corresponding to functions such as Forward, Backward, Left, Right, On/Off, OK, or Character input. The plurality of target controls on the touchscreen may include controls corresponding to functions such as Forward, Backward, Left, Right, On/Off, OK, or Character input. The fifth input may be an input by pressing a physical button by the first user 210, or may be a combined operation of pressing a plurality of physical buttons simultaneously, or may be an input by tapping a target control by the first user 210, so as to complete input of the third information.

The voice instruction in this embodiment of this application includes but is not limited to: A sound pick-up unit for collecting voice of a user is disposed on the first handle 230; and when receiving a voice such as "input XXXX", the first handle 230 is triggered to complete input of the third information.

Certainly, in some other embodiments of this application, the fifth input may alternatively be in another form, including but not limited to a character input, which may be specifically determined according to an actual requirement. This is not limited in this embodiment of this application.

In some embodiments of this application, after receiving the fifth input performed by the second user, the first handle 230 generates the third information. The first handle 230 may send the third information to the wearable device 250 in response to the fifth input. After receiving the third information, the wearable device 250 may display the third information on both the outer display screen and the inner display screen.

This embodiment of this application may be used in the following scenario.

The first user 210 wearing the wearable device 250 plays a Pictionary game with the second user 220. The role of the first user 210 in the game is a word guesser, and the role of the second user 220 in the game is a painter.

In a case in which the game starts, the second user 220 draws a track by using the second handle 240 according to a given phrase "The flowers are beautiful and the moon is full". The given phrase is preset information in this game.

As shown in FIG. 11 and FIG. 12, FIG. 11 shows the first track 1110 displayed on the outer display screen, and FIG. 12 shows the first track 1110 displayed on the inner display screen. After the outer display screen and the inner display screen synchronously display the first track 1110, the first user 210 may perform guessing based on the first track 1110, and the third information is a phrase guessed by the first user 210 based on the first track 1110. The first user 210 may enter the third information by using the first handle 230. For example, the first user 210 may enter characters corresponding to "The flowers are beautiful and the moon is full" through buttons, to complete input of the third information. Alternatively, there are a plurality of information options displayed on the inner display screen, and the first handle 230 can complete input of the third information by tapping an option corresponding to "The flowers are beautiful and the moon is full". Alternatively, the first user 310 may input a voice "The flowers are beautiful and the moon is full" by using the first handle 230, to complete input of the third information.

According to the display control method provided in this embodiment of this application, the fifth input performed by the first user is received by using the first handle, and the third information is displayed synchronously on the inner display screen and the outer display screen, so that the first user feeds back and outputs the first track. In addition, the second user can see the third information fed back by the first user, thereby implementing communication and interaction between the first user and the second user.

In some embodiments, after the inner display screen and the outer display screen synchronously display the third information that is input by the fifth input, the display control method further includes:
sending a sixth control message to the second handle to indicate the second handle to output second feedback information.

The second feedback information indicates that the third information has been displayed on the inner display screen, and the second feedback information includes vibration information or voice information.

In actual execution, after the inner display screen and the outer display screen synchronously display the third information that is input by the fifth input, the first handle 230 may receive a sixth input performed by the first user 210.

The sixth input is used by the first handle 230 to generate the sixth control message, and to send the sixth control message to the second handle 240. The sixth control message indicates the second handle 240 to output the second feedback information. The second feedback information is used to feed back, to the second user 220, that the third information has been displayed on the inner display screen, which also indicates that the first user 210 has completed input of the third information.

For example, the foregoing sixth input includes but is not limited to: a touch input on the first handle 230 which is performed by the first user 210 by using a touch apparatus such as a physical button, or a voice instruction entered by the first user 210, or another feasible input, which may be specifically determined according to an actual use requirement. This is not limited in this embodiment of this application.

The touch input in this embodiment of this application includes but is not limited to: a tap input or a press input on the first handle 230. The foregoing tap input may be a single-tap input, a double-tap input, an input with any number of taps, or the like, or may be a long-press input or a short-press input.

For example, a plurality of physical buttons may be disposed on the first handle 230. The plurality of physical buttons may be respectively corresponding to functions such as Forward, Backward, Left, Right, On/Off, OK, or Character input. The sixth input may be an input by pressing the physical button performed by the first user 210, or may be a combined operation of simultaneously pressing a plurality of physical buttons to complete the sixth input.

The voice instruction in this embodiment of this application includes but is not limited to: A sound pick-up unit for collecting voice of a user is disposed on the first handle 230; and when the first handle 230 receives a voice such as "Received", the second handle 240 is triggered to generate the second control message.

Certainly, in some other embodiments of this application, the sixth input may alternatively be in another form, including but not limited to a character input or a fingerprint input, which may be specifically determined according to an actual requirement. This is not limited in this embodiment of this application.

In some embodiments of this application, after receiving the sixth input performed by the first user 210, the first handle 230 generates the second control message. The first handle 230 may send the sixth control message to the second handle 240 in response to the sixth input.

After receiving the sixth control message, the second handle 240 outputs the second feedback information in response to the second control message. The second feedback information may be vibration information or voice information.

In a case that the second feedback information is vibration information, the second handle 240 may automatically perform vibration, and a vibration frequency and a vibration time may be set based on an actual situation, and are not specifically limited herein. In a case that the second feedback information is voice information, the second handle 240 may automatically output a voice, for example, "input completed" or "interaction completed".

The second user 220 may perceive, based on the vibration of the second handle 240, the feedback information from the first user 210 or learn, based on the voice information, the feedback information from the first user 210, so as to learn, in a timely manner, that the first user 210 has completed input of the third information.

This embodiment of this application may be used in the following scenario.

The first user 210 wearing the wearable device 250 plays a Pictionary game with the second user 220. The role of the first user 210 in the game is a word guesser, and the role of the second user 220 in the game is a painter.

In a case in which the game starts, the second user 220 draws a track by using the second handle 240 according to a given phrase "The flowers are beautiful and the moon is full". After the outer display screen and the inner display screen synchronously display the first track, the first user 210 may perform guessing based on the first track.

The phrase guessed by the first user 210 is "The flowers are beautiful and the moon is full", and the third information may be entered by the first user 210 by using the first handle 230 as "The flowers are beautiful and the moon is full".

The wearable device 250 sends the sixth control message to the second handle 240, so as to indicate the second handle 240 to output the second feedback information. The second user 220 may learn, according to the vibration information or the voice information, that the first user 210 has completed guessing.

When the wearable device 250 receives "The flowers are beautiful and the moon is full" entered by the first user 310, the wearable device may determine whether the phrase entered by the first user 310 is consistent with the given phrase. If the phrases are consistent, it indicates that the first user 210 and the second user 220 succeed in the game. If the phrases are inconsistent, it indicates that the first user 210 and the second user 220 fail in the game. After a determining result is obtained, the game result may be displayed on both the inner display screen and the outer display screen.

According to the display control method provided in this embodiment of this application, the first handle sends the sixth control message to the second handle, so that the second user can learn, in a timely manner, that the first user has completed the third input, and the first user and the second user can learn the interaction progress, thereby improving interaction efficiency of the wearable device, and optimizing interaction experience of the first user and the second user.

The display control method provided in embodiments of this application may be executed by a display control apparatus. In embodiments of this application, the display control apparatus provided in embodiments of this application is described by using an example in which the display control apparatus executes the display control method.

Embodiments of this application further provide a display control apparatus.

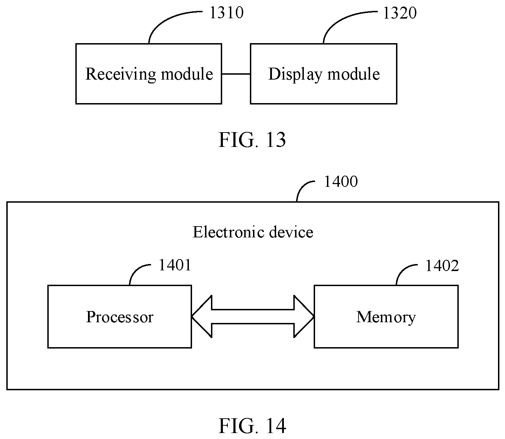

FIG. 13 is a schematic diagram of a structure of a display control apparatus according to an embodiment of this application.

As shown in FIG. 13, the display control apparatus includes a receiving module 1310 and a display module 1320.

The receiving module 1310 is configured to receive a first control message sent by a second handle.

The display module 1320 is configured to: in a case that the first control message indicates that target information is selected from at least two pieces of first information displayed on an outer display screen of a wearable device, display the target information on an inner display screen of the wearable device.

The first control message is a control message sent by the second handle in a case that the second handle receives a first input performed by a second user, a wearer of the wearable device is a first user, and the second handle is a handle controlled by the second user.

According to the display control apparatus provided in this embodiment of this application, the wearable device receives the first control message sent by the second handle, and the wearable device synchronously displays the target information on the inner display screen based on the first control message, so that the first user and the second user can interact in real time, thereby improving effectiveness of interaction between the first user and the second user, and further enriching interaction forms of the wearable device, so that the wearable device has relatively high interest and playability.

In some embodiments, the apparatus further includes:
a sending module, configured to: after the target information is displayed on the inner display screen of the wearable device, in a case that a first handle receives a second input performed by the first user, send a second control message to the second handle, to indicate the second handle to output first feedback information, where the first handle is a handle controlled by the first user.

The first feedback information indicates that the target information has been displayed on the inner display screen, and the first feedback information includes vibration information or voice information.

In some embodiments, display content on the outer display screen is at least two pieces of second information.

The receiving module 1310 is further configured to: before receiving the first control message sent by the second handle, receive a third control message sent by the second handle, where the third control message is a control message sent by the second handle in a case that the second handle receives a third input performed by the second user.

The apparatus further includes:
an updating module, configured to: in a case that the third control message indicates to update the display content on the outer display screen, update the at least two pieces of second information displayed on the outer display screen to the at least two pieces of first information.

In some embodiments, the display module 1320 is further configured to:
in a case that the first control message sent by the second handle and a fourth control message sent by a third handle are received, the first control message indicates that first target information is selected from the at least two pieces of first information displayed on the outer display screen, and the fourth control message indicates that second target information is selected from the at least two pieces of first information displayed on the outer display screen, display the first target information in a first display area of the inner display screen, and display the second target information in the second display area of the inner display screen.

The first display area is a display area associated with a handle identifier of the second handle and face information of the second user that controls the second handle, the second display area is a display area associated with a handle identifier of the third handle and face information of a third user that controls the third handle, the fourth control message is a control message sent by the third handle in a case that the third handle receives a fourth input performed by the third user, and the third handle is a handle controlled by the third user.

In some embodiments, the receiving module 1310 is further configured to receive a fifth control message sent by the second handle, where the fifth control message includes location change information of the second handle.

The display module 1320 is further configured to: in a case that the fifth control message indicates that the outer display screen displays a track drawn by the second handle, synchronously display a first track on the outer display screen and the inner display screen based on the location change information of the second handle.

The first track is generated based on the location change information of the second handle.

In some embodiments, the display module 1320 is further configured to: after the outer display screen and the inner display screen synchronously display the first track, in a case that the first handle receives a fifth input performed by the first user, synchronously display third information entered by the fifth input on the inner display screen and the outer display screen.

In some embodiments, the sending module is further configured to: after the inner display screen and the outer display screen synchronously display the third information entered by the fifth input, send a sixth control message to the second handle to indicate the second handle to output second feedback information.

The second feedback information indicates that the third information has been displayed on the inner display screen, and the second feedback information includes vibration information or voice information.

The display control apparatus in this embodiment of this application may be a virtual reality device, or may be a component in the virtual reality device, such as an integrated circuit or a chip. For example, the virtual reality device may be a wearable device, which is not specifically limited in this embodiment of this application.

The display control apparatus in this embodiment of this application may be an apparatus with an operating system. The operating system may be an Android (Android) operating system, may be an iOS operating system, or may be another possible operating system. This is not specifically limited in this embodiment of this application.

The display control apparatus provided in this embodiment of this application can implement all the processes implemented in the method embodiments in FIG. 1 to FIG. 12. To avoid repetition, details are not described herein again.

Optionally, as shown in FIG. 14, embodiments of this application further provide an electronic device 1400, including a processor 1401, a memory 1402, and a program or instructions that are stored in the memory 1402 and may run on the processor 1401. When the program or the instructions are executed by the processor 1401, each process of the foregoing display control method embodiment can be implemented, and the same technical effect can be achieved. To avoid repetition, details are not described herein again.

It should be noted that the electronic device in this embodiment of this application includes the foregoing mobile electronic device and a non-mobile electronic device.

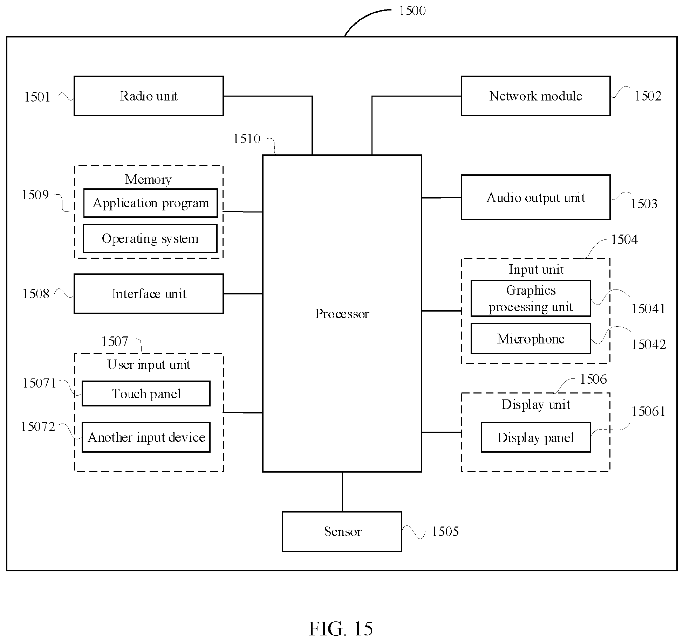

FIG. 15 is a schematic diagram of a hardware structure of an electronic device implementing an embodiment of this application.

The electronic device 1500 includes but is not limited to components such as a radio unit 1501, a network module 1502, an audio output unit 1503, an input unit 1504, a sensor 1505, a display unit 1506, a user input unit 1507, an interface unit 1508, a memory 1509, and a processor 1510.

A person skilled in the art may understand that the electronic device 1500 may further include a power supply (such as a battery) that supplies power to each component, and the power supply may be logically connected to the processor 1510 through a power management system, so as to implement functions such as charging management, discharging management, and power consumption management by using the power management system. The structure of the electronic device shown in FIG. 15 does not constitute a limitation on the electronic device. The electronic device may include more or fewer components than those shown in the figure, or combine some components, or have different component arrangements. Details are not described herein again.

The processor 1510 is configured to: receive a first control message sent by a second handle; and
in a case that the first control message indicates that target information is selected from at least two pieces of first information displayed on an outer display screen of a wearable device, display the target information on an inner display screen of the wearable device.

The first control message is a control message sent by the second handle in a case that the second handle receives a first input performed by a second user, a wearer of the wearable device is a first user, and the second handle is a handle controlled by the second user.

According to the electronic device provided in this embodiment of this application, the wearable device receives the first control message sent by the second handle, and the wearable device synchronously displays the target information on the inner display screen based on the first control message, so that the first user and the second user can interact in real time, thereby improving effectiveness of interaction between the first user and the second user, and further enriching interaction forms of the wearable device, so that the wearable device has relatively high interest and playability.

Optionally, the processor 1510 is further configured to: after the target information is displayed on the inner display screen of the wearable device, in a case that a first handle receives a second input performed by the first user, send a second control message to the second handle, to indicate the second handle to output first feedback information, where the first handle is a handle controlled by the first user.

The first feedback information indicates that the target information has been displayed on the inner display screen, and the first feedback information includes vibration information or voice information.

Optionally, the display content of the outer display screen is at least two pieces of second information.

The processor 1510 is further configured to: before receiving the first control message sent by the second handle, receive a third control message sent by the second handle, where the third control message is a control message sent by the second handle in a case that the second handle receives a third input performed by the second user; and
in a case that the third control message indicates to update the display content on the outer display screen, update the at least two pieces of second information displayed on the outer display screen to the at least two pieces of first information.

Optionally, the processor 1510 is further configured to: in a case that the first control message sent by the second handle and a fourth control message sent by a third handle are received, the first control message indicates that first target information is selected from the at least two pieces of first information displayed on the outer display screen, and the fourth control message indicates that second target information is selected from the at least two pieces of first information displayed on the outer display screen, display the first target information in a first display area of the inner display screen, and display the second target information in the second display area of the inner display screen.

The first display area is a display area associated with a handle identifier of the second handle and face information of the second user that controls the second handle, the second display area is a display area associated with a handle identifier of the third handle and face information of a third user that controls the third handle, the fourth control message is a control message sent by the third handle in a case that the third handle receives a fourth input performed by the third user, and the third handle is a handle controlled by the third user.

Optionally, the processor 1510 is further configured to: receive a fifth control message sent by the second handle, where the fifth control message includes location change information of the second handle; and
in a case that the fifth control message indicates that the outer display screen displays a track drawn by the second handle, synchronously display a first track on the outer display screen and the inner display screen based on the location change information of the second handle.

The first track is generated based on the location change information of the second handle.

Optionally, the processor 1510 is further configured to: after the outer display screen and the inner display screen synchronously display the first track, in a case that the first handle receives a fifth input performed by the first user, synchronously display third information entered by the fifth input on the inner display screen and the outer display screen.

Optionally, the processor 1510 is further configured to: after the inner display screen and the outer display screen synchronously display the third information entered by the fifth input, send a sixth control message to the second handle to indicate the second handle to output second feedback information.

The second feedback information indicates that the third information has been displayed on the inner display screen, and the second feedback information includes vibration information or voice information.

It should be understood that in this embodiment of this application, the input unit 1504 may include a graphics processing unit (Graphics Processing Unit, GPU) 15041 and a microphone 15042. The graphics processing unit 15041 processes image data of a still picture or a video obtained by an image capture apparatus (such as a camera) in a video capture mode or an image capture mode. The display unit 1506 may include a display panel 15061, and the display panel 15061 may be configured in a form of a liquid crystal display, an organic light-emitting diode, or the like. The user input unit 1507 includes at least one of a touch panel 15071 or another input device 15072. The touch panel 15071 is also referred to as a touchscreen. The touch panel 15071 may include a touch detection apparatus and a touch controller. The another input device 15072 may include but is not limited to a physical keyboard, a function button (such as a volume control button or an on/off button), a trackball, a mouse, and a joystick. Details are not described herein again.

The memory 1509 may be configured to store a software program and various types of data. The memory 1509 may mainly include a first storage area for storing a program or instructions and a second storage area for storing data. The first storage area may store an operating system, an application program or instructions required by at least one function (such as a sound play function or an image play function), and the like. In addition, the memory 1509 may include a volatile memory or a nonvolatile memory, or the memory 1509 may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1509 in this embodiment of this application includes but is not limited to these and any other suitable types of memories.

The processor 1510 may include one or more processing units. Optionally, the processor 1510 integrates an application processor and a modem processor, where the application processor mainly processes operations related to an operating system, a user interface, an application program, and the like, and the modem processor mainly processes a wireless communication signal, such as a baseband processor. It may be understood that the modem processor may alternatively not be integrated into the processor 1510.

Embodiments of this application further provide a readable storage medium. The readable storage medium stores a program or instructions. When the program or the instructions are executed by a processor, processes in the foregoing display control method embodiments can be implemented, and the same technical effect can be achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

Embodiments of this application further provide a chip. The chip includes a processor and a communication interface, the communication interface is coupled to the processor, and the processor is configured to run a program or instructions to implement processes in the foregoing display control method embodiment. The same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application provides a computer program product. The program product is stored in a storage medium. The program product is executed by at least one processor to implement processes in the foregoing display method embodiment, and the same technical effect can be achieved. To avoid repetition, details are not described herein again.

It should be noted that in this specification, the term "include", "comprise", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. Without more constraints, an element defined by the phrase "includes a..." does not exclude the existence of other identical elements in the process, method, article or apparatus including the element. In addition, it should be noted that the scope of the method and apparatus in the implementations of this application is not limited to performing functions in a sequence shown or discussed, and may further include performing functions in a basically simultaneous manner or in a reverse sequence according to the functions involved. For example, the described method may be performed in a different order, and various steps may be added, omitted, or combined. In addition, features described with reference to some examples may be combined in other examples.

According to the foregoing descriptions of the implementations, a person skilled in the art may clearly understand that the foregoing embodiments may be implemented by using software plus a required universal hardware platform, or certainly may be implemented by using hardware. However, in many cases, the former is a better implementation. Based on such an understanding, the technical solutions of this application essentially or the part contributing to the current technology may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the method described in embodiments of this application.

## Claims

1. A display control method comprising:
receiving (110) a first control message sent by a second handle (240); and **characterized by** further comprising:
in a case that the first control message indicates that target information is selected from at least two pieces of first information (310) displayed on an outer display screen of a wearable device (250), displaying (120) the target information on an inner display screen of the wearable device (250);
wherein the first control message is a control message sent by the second handle (240) in a case that the second handle (240) receives a first input performed by a second user (220), a wearer of the wearable device (250) is a first user (210), and the second handle (240) is a handle controlled by the second user (220).

2. The display control method according to claim 1, wherein after the displaying (120) the target information on an inner display screen of the wearable device (250), the method further comprises:
in a case that a first handle (230) receives a second input performed by the first user (210), sending a second control message to the second handle (240), to indicate the second handle (240) to output first feedback information, wherein the first handle (230) is a handle controlled by the first user (210);
wherein the first feedback information indicates that the target information has been displayed on the inner display screen, and the first feedback information comprises vibration information or voice information.

3. The display control method according to claim 1, wherein before the first control message sent by the second handle (240) is received, display content on the outer display screen is at least two pieces of second information (510); and
the method further comprises:
receiving a third control message sent by the second handle (240), wherein the third control message is a control message sent by the second handle (240) in a case that the second handle (240) receives a third input performed by the second user (220); and
in a case that the third control message indicates to update the display content on the outer display screen, updating the at least two pieces of second information (510) displayed on the outer display screen to the at least two pieces of first information (310).

4. The display control method according to claim 1, wherein in a case that the first control message sent by the second handle (240) and a fourth control message sent by a third handle (650) are received, the displaying (120) the target information on an inner display screen of the wearable device (250) comprises:
in a case that the first control message indicates that first target information is selected from the at least two pieces of first information (310) displayed on the outer display screen, and the fourth control message indicates that second target information is selected from the at least two pieces of first information (310) displayed on the outer display screen, displaying the first target information in a first display area of the inner display screen, and displaying the second target information in a second display area of the inner display screen;
wherein the first display area is a display area associated with a handle identifier of the second handle (240) and face information of the second user (220) that controls the second handle (240), the second display area is a display area associated with a handle identifier of the third handle (650) and face information of a third user (630) that controls the third handle (650), the fourth control message is a control message sent by the third handle (650) in a case that the third handle (650) receives a fourth input performed by the third user (630), and the third handle (650) is a handle controlled by the third user (630).

5. The display control method according to claim 1, wherein the method further comprises:
receiving a fifth control message sent by the second handle (240), wherein the fifth control message comprises location change information of the second handle (240); and
in a case that the fifth control message indicates that the outer display screen displays a track drawn by the second handle (240), synchronously displaying a first track (1110) on the outer display screen and the inner display screen based on the location change information of the second handle (240);
wherein the first track (1110) is generated based on the location change information of the second handle (240).

6. The display control method according to claim 5, wherein after the synchronously displaying a first track (1110) on the outer display screen and the inner display screen, the method further comprises:
in a case that the first handle (230) receives a fifth input performed by the first user (210), synchronously displaying third information entered by the fifth input on the inner display screen and the outer display screen.

7. The display control method according to claim 6, wherein after the synchronously displaying third information entered by the fifth input on the inner display screen and the outer display screen, the method further comprises:
sending a sixth control message to the second handle (240) to indicate the second handle (240) to output second feedback information;
wherein the second feedback information indicates that the third information has been displayed on the inner display screen, and the second feedback information comprises vibration information or voice information.

8. A display control apparatus comprising:
a receiving module (1310), configured to receive a first control message sent by a second handle; and **characterized by** further comprising:
a display module (1320), configured to: in a case that the first control message indicates that target information is selected from at least two pieces of first information displayed on an outer display screen of a wearable device, display the target information on an inner display screen of the wearable device;
wherein the first control message is a control message sent by the second handle in a case that the second handle receives a first input performed by a second user, a wearer of the wearable device is a first user, and the second handle is a handle controlled by the second user.

9. The display control apparatus according to claim 8, wherein the apparatus further comprises:
a sending module, configured to: after the target information is displayed on the inner display screen of the wearable device, in a case that a first handle receives a second input performed by the first user, send a second control message to the second handle, to indicate the second handle to output first feedback information, wherein the first handle is a handle controlled by the first user;
wherein the first feedback information indicates that the target information has been displayed on the inner display screen, and the first feedback information comprises vibration information or voice information.

10. The display control apparatus according to claim 8, wherein display content of the outer display screen is at least two pieces of second information;
the receiving module (1310) is further configured to: before receiving the first control message sent by the second handle, receive a third control message sent by the second handle, wherein the third control message is a control message sent by the second handle in a case that the second handle receives a third input performed by the second user; and
the apparatus further comprises:
an updating module, configured to: in a case that the third control message indicates to update the display content on the outer display screen, update the at least two pieces of second information displayed on the outer display screen to the at least two pieces of first information.

11. The display control apparatus according to claim 8, wherein the display module (1320) is further configured to:
in a case that the first control message sent by the second handle and a fourth control message sent by a third handle are received, the first control message indicates that first target information is selected from the at least two pieces of first information displayed on the outer display screen, and the fourth control message indicates that second target information is selected from the at least two pieces of first information displayed on the outer display screen, display the first target information in a first display area of the inner display screen, and display the second target information in a second display area of the inner display screen;
wherein the first display area is a display area associated with a handle identifier of the second handle and face information of the second user that controls the second handle, the second display area is a display area associated with a handle identifier of the third handle and face information of a third user that controls the third handle, the fourth control message is a control message sent by the third handle in a case that the third handle receives a fourth input performed by the third user, and the third handle is a handle controlled by the third user.

12. The display control apparatus according to claim 8, wherein
the receiving module (1310) is further configured to receive a fifth control message sent by the second handle, wherein the fifth control message comprises location change information of the second handle; and
the display module (1320) is further configured to: in a case that the fifth control message indicates that the outer display screen displays a track drawn by the second handle, synchronously display a first track on the outer display screen and the inner display screen based on the location change information of the second handle;
wherein the first track is generated based on the location change information of the second handle.

13. The display control apparatus according to claim 12, wherein
the display module (1320) is further configured to: after the outer display screen and the inner display screen synchronously display the first track, in a case that the first handle receives a fifth input performed by the first user, synchronously display third information entered by the fifth input on the inner display screen and the outer display screen.

14. The display control apparatus according to claim 13, wherein
the sending module is further configured to: after the inner display screen and the outer display screen synchronously display the third information entered by the fifth input, send a sixth control message to the second handle to indicate the second handle to output second feedback information;
the second feedback information indicates that the third information has been displayed on the inner display screen, and the second feedback information comprises vibration information or voice information.

15. A readable storage medium, **characterized in that** a program or instructions are stored on the readable storage medium, and when the program or instructions are executed by a processor (1510), the method according to claims 1 to 7 is implemented.

## Patentansprüche

1. Ein Anzeigesteuerverfahren, das Folgendes beinhaltet:
Empfangen (110) einer ersten Steuernachricht, die von einem zweiten Bediengerät (240) gesendet wird; und **dadurch gekennzeichnet, dass** es ferner Folgendes beinhaltet:
in einem Fall, dass die erste Steuernachricht angibt, dass Zielinformationen aus mindestens zwei Teilen von ersten Informationen (310) ausgewählt werden, die auf einem äußeren Anzeigebildschirm einer tragbaren Vorrichtung (250) angezeigt werden, Anzeigen (120) der Zielinformationen auf einem inneren Anzeigebildschirm der tragbaren Vorrichtung (250);
wobei die erste Steuernachricht eine Steuernachricht ist, die von dem zweiten Bediengerät (240) gesendet wird, in einem Fall, dass das zweite Bediengerät (240) eine erste Eingabe empfängt, die von einem zweiten Benutzer (220) durchgeführt wird, ein Träger der tragbaren Vorrichtung (250) ein erster Benutzer (210) ist und das zweite Bediengerät (240) ein Bediengerät ist, das von dem zweiten Benutzer (220) gesteuert wird.

2. Anzeigesteuerverfahren gemäß Anspruch 1, wobei nach dem Anzeigen (120) der Zielinformationen auf einem inneren Anzeigebildschirm der tragbaren Vorrichtung (250) das Verfahren ferner Folgendes beinhaltet:
in einem Fall, dass ein erstes Bediengerät (230) eine zweite Eingabe empfängt, die von dem ersten Benutzer (210) durchgeführt wird, Senden einer zweiten Steuernachricht an das zweite Bediengerät (240), um dem zweiten Bediengerät (240) anzugeben, erste Rückmeldungsinformationen auszugeben, wobei das erste Bediengerät (230) ein Bediengerät ist, das von dem ersten Benutzer (210) gesteuert wird;
wobei die ersten Rückmeldungsinformationen angeben, dass die Zielinformationen auf dem inneren Anzeigebildschirm angezeigt wurden, und die ersten Rückmeldungsinformationen Vibrationsinformationen oder Sprachinformationen beinhalten.

3. Anzeigesteuerverfahren gemäß Anspruch 1, wobei, bevor die erste Steuernachricht, die von dem zweiten Bediengerät (240) gesendet wird, empfangen wird, der Anzeigeinhalt auf dem äußeren Anzeigebildschirm mindestens zwei Teile zweiter Informationen (510) ist; und
das Verfahren ferner Folgendes beinhaltet:
Empfangen einer dritten Steuernachricht, die von dem zweiten Bediengerät (240) gesendet wird, wobei die dritte Steuernachricht eine Steuernachricht ist, die von dem zweiten Bediengerät (240) gesendet wird, in einem Fall, dass das zweite Bediengerät (240) eine dritte Eingabe empfängt, die von dem zweiten Benutzer (220) durchgeführt wird; und
in einem Fall, dass die dritte Steuernachricht angibt, den Anzeigeinhalt auf dem äußeren Anzeigebildschirm zu aktualisieren, Aktualisieren der mindestens zwei Teile zweiter Informationen (510), die auf dem äußeren Anzeigebildschirm angezeigt werden, auf die mindestens zwei Teile erster Informationen (310).

4. Anzeigesteuerverfahren gemäß Anspruch 1, wobei in einem Fall, dass die erste Steuernachricht, die von dem zweiten Bediengerät (240) gesendet wird, und eine vierte Steuernachricht, die von einem dritten Bediengerät (650) gesendet wird, empfangen werden, das Anzeigen (120) der Zielinformationen auf einem inneren Anzeigebildschirm der tragbaren Vorrichtung (250) Folgendes beinhaltet:
in einem Fall, dass die erste Steuernachricht angibt, dass erste Zielinformationen aus den mindestens zwei Teilen erster Informationen (310) ausgewählt werden, die auf dem äußeren Anzeigebildschirm angezeigt werden, und die vierte Steuernachricht angibt, dass zweite Zielinformationen aus den mindestens zwei Teilen erster Informationen (310) ausgewählt werden, die auf dem äußeren Anzeigebildschirm angezeigt werden, Anzeigen der ersten Zielinformationen in einem ersten Anzeigebereich des inneren Anzeigebildschirms und Anzeigen der zweiten Zielinformationen in einem zweiten Anzeigebereich des inneren Anzeigebildschirms;
wobei der erste Anzeigebereich ein Anzeigebereich ist, der mit einer Bediengerätkennung des zweiten Bediengeräts (240) und Gesichtsinformationen des zweiten Benutzers (220), der das zweite Bediengerät (240) steuert, assoziiert ist, der zweite Anzeigebereich ein Anzeigebereich ist, der mit einer Bediengerätkennung des dritten Bediengeräts (650) und Gesichtsinformationen eines dritten Benutzers (630), der das dritte Bediengerät (650) steuert, assoziiert ist, die vierte Steuernachricht eine Steuernachricht ist, die von dem dritten Bediengerät (650) gesendet wird, in einem Fall, dass das dritte Bediengerät (650) eine vierte Eingabe empfängt, die von dem dritten Benutzer (630) durchgeführt wird, und das dritte Bediengerät (650) ein Bediengerät ist, das von dem dritten Benutzer (630) gesteuert wird.

5. Anzeigesteuerverfahren gemäß Anspruch 1, wobei das Verfahren ferner Folgendes beinhaltet:
Empfangen einer fünften Steuernachricht, die von dem zweiten Bediengerät (240) gesendet wird, wobei die fünfte Steuernachricht Ortsänderungsinformationen des zweiten Bediengeräts (240) beinhaltet; und
in einem Fall, dass die fünfte Steuernachricht angibt, dass der äußere Anzeigebildschirm eine Spur anzeigt, die von dem zweiten Bediengerät (240) gezeichnet wird, synchrones Anzeigen einer ersten Spur (1110) auf dem äußeren Anzeigebildschirm und dem inneren Anzeigebildschirm basierend auf den Ortsänderungsinformationen des zweiten Bediengeräts (240);
wobei die erste Spur (1110) basierend auf den Ortsänderungsinformationen des zweiten Bediengeräts (240) erzeugt wird.

6. Anzeigesteuerverfahren gemäß Anspruch 5, wobei nach dem synchronen Anzeigen einer ersten Spur (1110) auf dem äußeren Anzeigebildschirm und dem inneren Anzeigebildschirm das Verfahren ferner Folgendes beinhaltet:
in einem Fall, dass das erste Bediengerät (230) eine fünfte Eingabe empfängt, die von dem ersten Benutzer (210) durchgeführt wird, synchrones Anzeigen dritter Informationen, die von der fünften Eingabe eingegeben werden, auf dem inneren Anzeigebildschirm und dem äußeren Anzeigebildschirm.

7. Anzeigesteuerverfahren gemäß Anspruch 6, wobei nach dem synchronen Anzeigen dritter Informationen, die von der fünften Eingabe eingegeben werden, auf dem inneren Anzeigebildschirm und dem äußeren Anzeigebildschirm das Verfahren ferner Folgendes beinhaltet:
Senden einer sechsten Steuernachricht an das zweite Bediengerät (240), um dem zweiten Bediengerät (240) anzugeben, zweite Rückmeldungsinformationen auszugeben;
wobei die zweiten Rückmeldungsinformationen angeben, dass die dritten Informationen auf dem inneren Anzeigebildschirm angezeigt wurden, und die zweiten Rückmeldungsinformationen Vibrationsinformationen oder Sprachinformationen beinhalten.

8. Eine Anzeigesteuereinrichtung, die Folgendes beinhaltet:
ein Empfangsmodul (1310), das konfiguriert ist, um eine erste Steuernachricht zu empfangen, die von einem zweiten Bediengerät gesendet wird; und **dadurch gekennzeichnet, dass** sie ferner Folgendes beinhaltet:
ein Anzeigemodul (1320), das für Folgendes konfiguriert ist: in einem Fall, dass die erste Steuernachricht angibt, dass Zielinformationen aus mindestens zwei Teilen erster Informationen ausgewählt werden, die auf einem äußeren Anzeigebildschirm einer tragbaren Vorrichtung angezeigt werden, Anzeigen der Zielinformationen auf einem inneren Anzeigebildschirm der tragbaren Vorrichtung;
wobei die erste Steuernachricht eine Steuernachricht ist, die von dem zweiten Bediengerät gesendet wird, in einem Fall, dass das zweite Bediengerät eine erste Eingabe empfängt, die von einem zweiten Benutzer durchgeführt wird, ein Träger der tragbaren Vorrichtung ein erster Benutzer ist und das zweite Bediengerät ein Bediengerät ist, das von dem zweiten Benutzer gesteuert wird.

9. Anzeigesteuereinrichtung gemäß Anspruch 8, wobei die Einrichtung ferner Folgendes beinhaltet:
ein Sendemodul, das für Folgendes konfiguriert ist: nachdem die Zielinformationen auf dem inneren Anzeigebildschirm der tragbaren Vorrichtung angezeigt werden, in einem Fall, dass ein erstes Bediengerät eine zweite Eingabe empfängt, die von dem ersten Benutzer durchgeführt wird, Senden einer zweiten Steuernachricht an das zweite Bediengerät, um dem zweiten Bediengerät anzugeben, erste Rückmeldungsinformationen auszugeben, wobei das erste Bediengerät ein Bediengerät ist, das von dem ersten Benutzer gesteuert wird;
wobei die ersten Rückmeldungsinformationen angeben, dass die Zielinformationen auf dem inneren Anzeigebildschirm angezeigt wurden, und die ersten Rückmeldungsinformationen Vibrationsinformationen oder Sprachinformationen beinhalten.

10. Anzeigesteuereinrichtung gemäß Anspruch 8, wobei der Anzeigeinhalt des äußeren Anzeigebildschirms mindestens zwei Teile zweiter Informationen ist;
das Empfangsmodul (1310) ferner für Folgendes konfiguriert ist: vor dem Empfangen der ersten Steuernachricht, die von dem zweiten Bediengerät gesendet wird, Empfangen einer dritten Steuernachricht, die von dem zweiten Bediengerät gesendet wird, wobei die dritte Steuernachricht eine Steuernachricht ist, die von dem zweiten Bediengerät gesendet wird, in einem Fall, dass das zweite Bediengerät eine dritte Eingabe empfängt, die von dem zweiten Benutzer durchgeführt wird; und
die Einrichtung ferner Folgendes beinhaltet:
ein Aktualisierungsmodul, das für Folgendes konfiguriert ist: in einem Fall, dass die dritte Steuernachricht angibt, den Anzeigeinhalt auf dem äußeren Anzeigebildschirm zu aktualisieren, Aktualisieren der mindestens zwei Teile zweiter Informationen, die auf dem äußeren Anzeigebildschirm angezeigt werden, auf die mindestens zwei Teile erster Informationen.

11. Anzeigesteuereinrichtung gemäß Anspruch 8, wobei das Anzeigemodul (1320) ferner für Folgendes konfiguriert ist:
in einem Fall, dass die erste Steuernachricht, die von dem zweiten Bediengerät gesendet wird, und eine vierte Steuernachricht, die von einem dritten Bediengerät gesendet wird, empfangen werden, die erste Steuernachricht angibt, dass erste Zielinformationen aus den mindestens zwei Teilen erster Informationen ausgewählt werden, die auf dem äußeren Anzeigebildschirm angezeigt werden, und die vierte Steuernachricht angibt, dass zweite Zielinformationen aus den mindestens zwei Teilen erster Informationen ausgewählt werden, die auf dem äußeren Anzeigebildschirm angezeigt werden, Anzeigen der ersten Zielinformationen in einem ersten Anzeigebereich des inneren Anzeigebildschirms und Anzeigen der zweiten Zielinformationen in einem zweiten Anzeigebereich des inneren Anzeigebildschirms;
wobei der erste Anzeigebereich ein Anzeigebereich ist, der mit einer Bediengerätkennung des zweiten Bediengeräts und Gesichtsinformationen des zweiten Benutzers, der das zweite Bediengerät steuert, assoziiert ist, der zweite Anzeigebereich ein Anzeigebereich ist, der mit einer Bediengerätkennung des dritten Bediengeräts und Gesichtsinformationen eines dritten Benutzers, der das dritte Bediengerät steuert, assoziiert ist, die vierte Steuernachricht eine Steuernachricht ist, die von dem dritten Bediengerät gesendet wird, in einem Fall, dass das dritte Bediengerät eine vierte Eingabe empfängt, die von dem dritten Benutzer durchgeführt wird, und das dritte Bediengerät ein Bediengerät ist, das von dem dritten Benutzer gesteuert wird.

12. Anzeigesteuereinrichtung gemäß Anspruch 8, wobei
das Empfangsmodul (1310) ferner konfiguriert ist, um eine fünfte Steuernachricht zu empfangen, die von dem zweiten Bediengerät gesendet wird, wobei die fünfte Steuernachricht Ortsänderungsinformationen des zweiten Bediengeräts beinhaltet; und das Anzeigemodul (1320) ferner für Folgendes konfiguriert ist: in einem Fall, dass die fünfte Steuernachricht angibt, dass der äußere Anzeigebildschirm eine Spur anzeigt, die von dem zweiten Bediengerät gezeichnet wird, synchrones Anzeigen einer ersten Spur auf dem äußeren Anzeigebildschirm und dem inneren Anzeigebildschirm basierend auf den Ortsänderungsinformationen des zweiten Bediengeräts; wobei die erste Spur basierend auf den Ortsänderungsinformationen des zweiten Bediengeräts erzeugt wird.

13. Anzeigesteuereinrichtung gemäß Anspruch 12, wobei
das Anzeigemodul (1320) ferner für Folgendes konfiguriert ist: nachdem der äußere Anzeigebildschirm und der innere Anzeigebildschirm die erste Spur synchron anzeigen, in einem Fall, dass das erste Bediengerät eine fünfte Eingabe empfängt, die von dem ersten Benutzer durchgeführt wird, synchrones Anzeigen dritter Informationen, die von der fünften Eingabe eingegeben werden, auf dem inneren Anzeigebildschirm und dem äußeren Anzeigebildschirm.

14. Anzeigesteuereinrichtung gemäß Anspruch 13, wobei
das Sendemodul ferner für Folgendes konfiguriert ist: nachdem der innere Anzeigebildschirm und der äußere Anzeigebildschirm die dritten Informationen, die von der fünften Eingabe eingegeben werden, synchron anzeigen, Senden einer sechsten Steuernachricht an das zweite Bediengerät, um dem zweiten Bediengerät anzugeben, zweite Rückmeldungsinformationen auszugeben;
die zweiten Rückmeldungsinformationen angeben, dass die dritten Informationen auf dem inneren Anzeigebildschirm angezeigt wurden, und die zweiten Rückmeldungsinformationen Vibrationsinformationen oder Sprachinformationen beinhalten.

15. Ein lesbares Speichermedium, **dadurch gekennzeichnet, dass** ein Programm oder Anweisungen auf dem lesbaren Speichermedium gespeichert sind, und wenn das Programm oder die Anweisungen von einem Prozessor (1510) ausgeführt werden, das Verfahren gemäß den Ansprüchen 1 bis 7 implementiert wird.

## Revendications

1. Un procédé de commande d'affichage comprenant :
la réception (110) d'un premier message de commande envoyé par une deuxième manette (240) ; et **caractérisé en ce qu'**il comprend en outre :
dans un cas où le premier message de commande indique que des informations cibles sont sélectionnées parmi au moins deux informations parmi des premières informations (310) affichées sur un écran d'affichage externe d'un dispositif pouvant être porté sur soi (250), l'affichage (120) des informations cibles sur un écran d'affichage interne du dispositif pouvant être porté sur soi (250) ;
dans lequel le premier message de commande est un message de commande envoyé par la deuxième manette (240) dans un cas où la deuxième manette (240) reçoit une première entrée effectuée par un deuxième utilisateur (220), un porteur du dispositif pouvant être porté sur soi (250) est un premier utilisateur (210), et la deuxième manette (240) est une manette commandée par le deuxième utilisateur (220).

2. Le procédé de commande d'affichage selon la revendication 1, après l'affichage (120) des informations cibles sur un écran d'affichage interne du dispositif pouvant être porté sur soi (250), le procédé comprenant en outre :
dans un cas où une première manette (230) reçoit une deuxième entrée effectuée par le premier utilisateur (210), l'envoi d'un deuxième message de commande à la deuxième manette (240), pour indiquer à la deuxième manette (240) de délivrer en sortie des premières informations de retour, la première manette (230) étant une manette commandée par le premier utilisateur (210) ;
dans lequel les premières informations de retour indiquent que les informations cibles ont été affichées sur l'écran d'affichage interne, et les premières informations de retour comprennent des informations de vibration ou des informations vocales.

3. Le procédé de commande d'affichage selon la revendication 1, dans lequel avant que le premier message de commande envoyé par la deuxième manette (240) ne soit reçu, le contenu d'affichage sur l'écran d'affichage externe est au moins deux informations parmi des deuxièmes informations (510) ; et
le procédé comprenant en outre :
la réception d'un troisième message de commande envoyé par la deuxième manette (240), le troisième message de commande étant un message de commande envoyé par la deuxième manette (240) dans un cas où la deuxième manette (240) reçoit une troisième entrée effectuée par le deuxième utilisateur (220) ; et
dans un cas où le troisième message de commande indique de mettre à jour le contenu d'affichage sur l'écran d'affichage externe, la mise à jour des au moins deux informations parmi des deuxièmes informations (510) affichées sur l'écran d'affichage externe par les au moins deux informations parmi des premières informations (310).

4. Le procédé de commande d'affichage selon la revendication 1, dans lequel dans un cas où le premier message de commande envoyé par la deuxième manette (240) et un quatrième message de commande envoyé par une troisième manette (650) sont reçus, l'affichage (120) des informations cibles sur un écran d'affichage interne du dispositif pouvant être porté sur soi (250) comprend :
dans un cas où le premier message de commande indique que des premières informations cibles sont sélectionnées parmi les au moins deux informations parmi des premières informations (310) affichées sur l'écran d'affichage externe, et le quatrième message de commande indique que des deuxièmes informations cibles sont sélectionnées parmi les au moins deux informations parmi des premières informations (310) affichées sur l'écran d'affichage externe, l'affichage des premières informations cibles dans une première zone d'affichage de l'écran d'affichage interne, et l'affichage des deuxièmes informations cibles dans une deuxième zone d'affichage de l'écran d'affichage interne ;
dans lequel la première zone d'affichage est une zone d'affichage associée à un identifiant de manette de la deuxième manette (240) et à des informations de visage du deuxième utilisateur (220) qui commande la deuxième manette (240), la deuxième zone d'affichage est une zone d'affichage associée à un identifiant de manette de la troisième manette (650) et à des informations de visage d'un troisième utilisateur (630) qui commande la troisième manette (650), le quatrième message de commande est un message de commande envoyé par la troisième manette (650) dans un cas où la troisième manette (650) reçoit une quatrième entrée effectuée par le troisième utilisateur (630), et la troisième manette (650) est une manette commandée par le troisième utilisateur (630).

5. Le procédé de commande d'affichage selon la revendication 1, le procédé comprenant en outre :
la réception d'un cinquième message de commande envoyé par la deuxième manette (240), le cinquième message de commande comprenant des informations de changement d'emplacement de la deuxième manette (240) ; et
dans un cas où le cinquième message de commande indique que l'écran d'affichage externe affiche une piste tracée par la deuxième manette (240), l'affichage de manière synchrone d'une première piste (1110) sur l'écran d'affichage externe et l'écran d'affichage interne sur la base des informations de changement d'emplacement de la deuxième manette (240) ;
dans lequel la première piste (1110) est générée sur la base des informations de changement d'emplacement de la deuxième manette (240).

6. Le procédé de commande d'affichage selon la revendication 5, après l'affichage de manière synchrone d'une première piste (1110) sur l'écran d'affichage externe et l'écran d'affichage interne, le procédé comprenant en outre :
dans un cas où la première manette (230) reçoit une cinquième entrée effectuée par le premier utilisateur (210), l'affichage de manière synchrone de troisièmes informations saisies par la cinquième entrée sur l'écran d'affichage interne et l'écran d'affichage externe.

7. Le procédé de commande d'affichage selon la revendication 6, après l'affichage de manière synchrone de troisièmes informations saisies par la cinquième entrée sur l'écran d'affichage interne et l'écran d'affichage externe, le procédé comprenant en outre :
l'envoi d'un sixième message de commande à la deuxième manette (240) pour indiquer à la deuxième manette (240) de délivrer en sortie des deuxièmes informations de retour ;
dans lequel les deuxièmes informations de retour indiquent que les troisièmes informations ont été affichées sur l'écran d'affichage interne, et les deuxièmes informations de retour comprennent des informations de vibration ou des informations vocales.

8. Un appareil de commande d'affichage comprenant :
un module de réception (1310), configuré pour recevoir un premier message de commande envoyé par une deuxième manette ; et **caractérisé en ce qu'**il comprend en outre :
un module d'affichage (1320), configuré pour : dans un cas où le premier message de commande indique que des informations cibles sont sélectionnées parmi au moins deux informations parmi des premières informations affichées sur un écran d'affichage externe d'un dispositif pouvant être porté sur soi, afficher les informations cibles sur un écran d'affichage interne du dispositif pouvant être porté sur soi ;
dans lequel le premier message de commande est un message de commande envoyé par la deuxième manette dans un cas où la deuxième manette reçoit une première entrée effectuée par un deuxième utilisateur, un porteur du dispositif pouvant être porté sur soi est un premier utilisateur, et la deuxième manette est une manette commandée par le deuxième utilisateur.

9. L'appareil de commande d'affichage selon la revendication 8, l'appareil comprenant en outre :
un module d'envoi, configuré pour : après que les informations cibles ont été affichées sur l'écran d'affichage interne du dispositif pouvant être porté sur soi, dans un cas où une première manette reçoit une deuxième entrée effectuée par le premier utilisateur, envoyer un deuxième message de commande à la deuxième manette, pour indiquer à la deuxième manette de délivrer en sortie des premières informations de retour, la première manette étant une manette commandée par le premier utilisateur ;
dans lequel les premières informations de retour indiquent que les informations cibles ont été affichées sur l'écran d'affichage interne, et les premières informations de retour comprennent des informations de vibration ou des informations vocales.

10. L'appareil de commande d'affichage selon la revendication 8, dans lequel le contenu d'affichage de l'écran d'affichage externe est au moins deux informations parmi des deuxièmes informations ;
le module de réception (1310) est en outre configuré pour : avant de recevoir le premier message de commande envoyé par la deuxième manette, recevoir un troisième message de commande envoyé par la deuxième manette, le troisième message de commande étant un message de commande envoyé par la deuxième manette dans un cas où la deuxième manette reçoit une troisième entrée effectuée par le deuxième utilisateur ; et
l'appareil comprenant en outre :
un module de mise à jour, configuré pour : dans un cas où le troisième message de commande indique de mettre à jour le contenu d'affichage sur l'écran d'affichage externe, mettre à jour les au moins deux informations parmi des deuxièmes informations affichées sur l'écran d'affichage externe par les au moins deux informations parmi des premières informations.

11. L'appareil de commande d'affichage selon la revendication 8, dans lequel le module d'affichage (1320) est en outre configuré pour :
dans un cas où le premier message de commande envoyé par la deuxième manette et un quatrième message de commande envoyé par une troisième manette sont reçus, le premier message de commande indique que des premières informations cibles sont sélectionnées parmi les au moins deux informations parmi des premières informations affichées sur l'écran d'affichage externe, et le quatrième message de commande indique que des deuxièmes informations cibles sont sélectionnées parmi les au moins deux informations parmi des premières informations affichées sur l'écran d'affichage externe, afficher les premières informations cibles dans une première zone d'affichage de l'écran d'affichage interne, et afficher les deuxièmes informations cibles dans une deuxième zone d'affichage de l'écran d'affichage interne ;
dans lequel la première zone d'affichage est une zone d'affichage associée à un identifiant de manette de la deuxième manette et à des informations de visage du deuxième utilisateur qui commande la deuxième manette, la deuxième zone d'affichage est une zone d'affichage associée à un identifiant de manette de la troisième manette et à des informations de visage d'un troisième utilisateur qui commande la troisième manette, le quatrième message de commande est un message de commande envoyé par la troisième manette dans un cas où la troisième manette reçoit une quatrième entrée effectuée par le troisième utilisateur, et la troisième manette est une manette commandée par le troisième utilisateur.

12. L'appareil de commande d'affichage selon la revendication 8, dans lequel
le module de réception (1310) est en outre configuré pour recevoir un cinquième message de commande envoyé par la deuxième manette, le cinquième message de commande comprenant des informations de changement d'emplacement de la deuxième manette ; et
le module d'affichage (1320) est en outre configuré pour : dans un cas où le cinquième message de commande indique que l'écran d'affichage externe affiche une piste tracée par la deuxième manette, afficher de manière synchrone une première piste sur l'écran d'affichage externe et l'écran d'affichage interne sur la base des informations de changement d'emplacement de la deuxième manette ;
dans lequel la première piste est générée sur la base des informations de changement d'emplacement de la deuxième manette.

13. L'appareil de commande d'affichage selon la revendication 12, dans lequel
le module d'affichage (1320) est en outre configuré pour : après que l'écran d'affichage externe et l'écran d'affichage interne ont affiché de manière synchrone la première piste, dans un cas où la première manette reçoit une cinquième entrée effectuée par le premier utilisateur, afficher de manière synchrone des troisièmes informations saisies par la cinquième entrée sur l'écran d'affichage interne et l'écran d'affichage externe.

14. L'appareil de commande d'affichage selon la revendication 13, dans lequel
le module d'envoi est en outre configuré pour : après que l'écran d'affichage interne et l'écran d'affichage externe ont affiché de manière synchrone les troisièmes informations saisies par la cinquième entrée, envoyer un sixième message de commande à la deuxième manette pour indiquer à la deuxième manette de délivrer en sortie des deuxièmes informations de retour ;
les deuxièmes informations de retour indiquent que les troisièmes informations ont été affichées sur l'écran d'affichage interne, et les deuxièmes informations de retour comprennent des informations de vibration ou des informations vocales.

15. Un support de stockage lisible, **caractérisé en ce qu'**un programme ou des instructions sont stockés sur le support de stockage lisible, et lorsque le programme ou les instructions sont exécutés par un processeur (1510), le procédé selon les revendications 1 à 7 est mis en œuvre.
